(19) Europäisches Patentamt
European Patent Office
Office européen des brevets

(11) **EP 4 475 042 A1**

(12) **EUROPÄISCHE PATENTANMELDUNG**

(43) Veröffentlichungstag:
**11.12.2024 Patentblatt 2024/50**

(21) Anmeldenummer: **24179057.5**

(22) Anmeldetag: **30.05.2024**

(51) Internationale Patentklassifikation (IPC):
***G06N 10/60*** (2022.01)

(52) Gemeinsame Patentklassifikation (CPC):
**G06N 10/60**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **07.06.2023 DE 102023115027**

(71) Anmelder: **Deutsches Zentrum für Luft- und Raumfahrt e. V.**
**53227 Bonn-Oberkassel (DE)**

(72) Erfinder:
• **Glatting, Kay**
**82269 Geltendorf (DE)**
• **Huber, Sigurd**
**87719 Mindelheim (DE)**
• **Krieger, Gerhard**
**82131 Gauting (DE)**

(74) Vertreter: **Gerstein, Hans Joachim et al**
**Meissner Bolte Patentanwälte**
**Rechtsanwälte Partnerschaft mbB**
**Plathnerstraße 3A**
**30175 Hannover (DE)**

(54) **VERFAHREN UND VORRICHTUNG ZUR AUTOMATISCHEN ERMITTLUNG VON OPTIMALEN BI-PHASEN-CODES**

(57) Die vorliegende Erfindung offenbart ein Verfahren zur automatischen Ermittlung von optimalen Bi-Phasen-Codes, die einen unter einem vorgegebenen Schwellwert liegenden Wert der Autokorrelation des jeweiligen Bi-Phasen-Codes haben. Die optimalen Bi-Phasen-Codes werden mit einem gatterbasierten Quantenschaltkreis eines Quantencomputers aus Qubits als Zustands-Eingangsgrößen ermittelt, deren Zustände mögliche Bi-Phasen-Codes repräsentieren, und zwar durch

- Berechnen der Autokorrelation der die möglichen Kombinationen von Bi-Phasen Codes beinhaltenden Zustände der Zustands-Eingangsgrößen mit mehreren diskreten Schritten und
- Identifizieren eines Bi-Phasen-Codes als optimal, wenn der Wert der Autokorrelation in allen aufeinanderfolgenden diskreten Schritten der Berechnung der Autokorrelation kleiner als der vorgegebene Schwellwert ist.

Grover Zählen

Fig. 1

EP 4 475 042 A1

**Beschreibung**

Die Erfindung betrifft ein Verfahren zur automatischen Ermittlung von optimalen Bi-Phasen-Codes, die einen unter einem vorgegebenen Schwellwert liegenden Wert der Autokorrelation des jeweiligen Bi-Phasen-Codes haben.

Die Erfindung betrifft weiterhin eine Vorrichtung zur automatischen Ermittlung von optimalen Bi-Phasen-Codes, die einen unter einem vorgegebenen Schwellwert liegenden Wert der Autokorrelation des jeweiligen Bi-Phasen-Codes haben, mit einer gatterbasierten Quantenschaltung eines Quantencomputers zur Verarbeitung von Qubits.

Bi-Phasen-Codes sind Folgen aus Minus-Einsen und Einsen (oder äquivalent aus Nullen und Einsen, sogenannten Binärcodes). Für viele Anwendung werden Sequenzen benötigt, deren Autokorrelationsfunktionen ein möglichst großes Haupt- zu Nebenkeulenverhältnis aufweisen. Codesequenzen der Länge N mit einem Haupt- zu Nebenkeulenverhältnis von genau N sind beispielsweise als Barker-Codes bekannt. Sie existieren nur für Längen bis maximal 13.

Ein typisches Anwendungsgebiet für optimale Bi-Phasen-Codes ist die Funktechnik, wo sog. Frequenzspreizverfahren verwendet werden, um die Übertragung von Nutzsignalen robuster gegen (schmalbändige) Störungen zu machen. Ein anderes Beispiel sind Spreizcodes in der Nachrichtentechnik, wie sie in Codemultiplexverfahren eingesetzt werden, mit dem Ziel, mehrere Nutzersignale am Ort des Empfängers zu trennen. Ein weiteres Anwendungsgebiet ist die Radartechnik, wo Bi-Phasen- Codes zur Pulskompression verwendet werden um damit eine Verbesserung der Entfernungsauflösung zu ermöglichen.

Die Berechnung von optimalen Bi-Phasen-Codes mit großen Haupt- zu Nebenkeulenverhältnis bzw. geringer Autokorrelation (englisch: Low Autocorrelation Binary Sequences (LABS)) ist ein Optimierungsproblem, das bislang mit algebraischen Berechnungsprogrammen auf (klassischen) Computern gelöst wird. Mit zunehmender Codelänge N steigt die Komplexität und die Anforderung an die Rechenressourcen aber derart an, dass sie mit herkömmlichen Verfahren, selbst mit sehr hohem Rechenaufwand, nur bis zu einer Länge von N = 105 berechnet werden können.

Die Berechnung von Bi-Phasen-Codes lässt sich in zwei Ansätze aufteilen, die vollständige und die teilweise Suche.

Für die vollständige Suche von Sequenzen der Länge N wird für jede binäre Kombination mit Länge N die Autokorrelation einzeln errechnet. Dies ist mit einem rechnerischen Aufwand von $O(2^N)$ verbunden. Damit werden alle optimalen Sequenzen gefunden bzw. ermittelt.

Für die teilweise Suche wird, durch qualitative Argumente und statistische Heuristiken, der Suchraum verringert. Diese Ansätze können allerdings nicht das Finden von optimalen Sequenzen garantieren.

Sowohl die vollständige als auch teilweise Suche haben signifikante Nachteile:
Die vollständige Suche ermöglicht das Finden aller optimalen Sequenzen und bietet somit die besten Ergebnisse für Codes einer Länge N, jedoch skaliert der rechnerische Aufwand auch schon für kurze Codelängen so schlecht, dass sich die vollständige Suche mit aktuellen Computern technisch nicht bzw. nicht mit vertretbarem Aufwand realisieren lässt.

Die teilweise Suche ermöglicht eine Verbesserung des notwendigen Aufwandes, wodurch die Betrachtung von längeren Codesequenzen möglich ist. Jedoch werden durch diesen Ansatz oft nur einzelne gute aber nicht optimale Lösungen gefunden. Weiter skalieren diese Ansätze ähnlich, wie die vollständige Suche, mit langen Codelängen, sodass auch Näherungen für lange Codesequenzen nicht mehr berechnet werden können.

So beschreibt beispielsweise M. Dimitrov, T. Baitcheva and N. Nikolov, "Efficient Generation of Low Autocorrelation Binary Sequences,", in IEEE Signal Processing Letters, vol. 27, pp. 341-345, 2020, doi: 10.1109/LSP.2020.2972127 eine Suche nach optimalen binären Sequenzen mit einer heuristischen Suche durch einen "Shotgun-Hill-Climbing" Algorithmus, der eine Variante des sogenannten Bergsteiger Algorithmus ist, welcher ein heuristisches Optimierungsverfahren implementiert.

Auf dieser Grundlage wird in J. Brest and B. Boš kovič , "Low Autocorrelation Binary Sequences: Best-Known Peak Sidelobe Level Values", in IEEE Access, vol. 9, pp. 67713-67723, 2021, doi: 10.1109/ACCESS.2021.3077541, ein weiter verbesserter Algorithmus mit einer Fitnessfunktion beschrieben.

US 8,493,245 B2 offenbart ein System und ein Verfahren zur Ermittlung von Bi-Phasen-Sequenzen mit niedrigen Nebenkeulen-Spitzenwerten mit einem evolutionären Algorithmus, bei dem jeweils Bits von binären Elternsequenzen einzeln umgedreht werden und eine zufällige Auswahl einer Elternsequenz und Anwendung einer Zwei-PunktMutation auf die Elternsequenzen erfolgt.

US 8,831,066 B2 offenbart ein Verfahren zum Generieren eines Paars von orthogonalen Codes mit einem Spreizfaktor N für ein Direktsequenz-Spreizspektrum-Kommunikationssystem.

US 7,028,275 B1 beschreibt ein Verfahren zur Ausführung einer Datensuche mit einem Quantenschaltkreis, der zur Ausführung des Grover Algorithmus ausgestaltet ist. Hierzu wird eine Anzahl von Qubits durch Erzeugen einer Überlagerung von Quantenzuständen in den Qubits initialisiert. Das Vorzeichen eines Ziel-Quantenzustands wird invertiert und eine Berechnung einer Inversion über den Durchschnitt für jedes Qubit unter Verwendung von einheitlichen Ein-Bit-Gattern und 2-Bit Quantenphasen-Gattern durchgeführt.

EP 3 908 988 B1 beschreibt ein Verfahren zum Implementieren eines Multi-Qubit-Gates unter Verwendung

einer Ionenfalle. Damit soll beispielsweise ein Grover-Algorithmus implementiert werden.

Aufgabe der Erfindung ist es, ein verbessertes Verfahren und eine Vorrichtung zur automatischen Ermittlung von optimalen Bi-Phasen-Codes, die einen unter einem vorgegebenen Schwellwert liegenden Wert der Autokorrelation des jeweiligen Bi-Phasen-Codes haben und eine möglichst große Sequenzlänge aufweisen, die größer als die Sequenzlängen der bislang bekannten optimalen Bi-Phasen-Codes sind.

Die Aufgabe wird mit dem Verfahren mit den Merkmalen des Anspruchs 1 und durch die Vorrichtung mit den Merkmalen des Anspruch 6 gelöst. Vorteilhafte Ausführungsformen sind in den Unteransprüchen beschrieben.

Das Verfahren zur automatischen Ermittlung von optimalen Bi-Phasen-Codes, die einen unter einem vorgegebenen Schwellwert liegenden Wert der Autokorrelation des jeweiligen Bi-Phasen-Codes haben, hat erfindungsgemäß die folgenden Schritte:

- Ermitteln der optimalen Bi-Phasen-Codes mit einem gatterbasierten Quantenschaltkreis eines Quantencomputers aus Qubits als Zustands-Eingangsgrößen, deren Zustände mögliche Bi-Phasen-Codes repräsentieren, durch
- Berechnen der Autokorrelation der die möglichen Kombinationen von Bi-Phasen-Codes beinhaltenden Zustände der Zustands-Eingangsgrößen mit mehreren diskreten Schritten, und
- Identifizieren eines Bi-Phasen-Codes als optimal, wenn der Wert der Autokorrelation in allen aufeinanderfolgenden diskreten Schritten der Berechnung der Autokorrelation kleiner als der vorgegebene Schwellwert ist.

In entsprechender Weise hat die Vorrichtung zur automatischen Ermittlung von optimalen Bi-Phasen-Codes, die einen unter einem vorgegebenen Schwellwert liegenden Wert der Autokorrelation des jeweiligen Bi-Phasen-Codes haben, eine gatterbasierte Quantenschaltung eines Quantencomputers zur Verarbeitung von Qubits. Diese gatterbasierte Quantenschaltung ist zum Ermitteln der optimalen Bi-Phasen-Codes mit der gatterbasierten Quantenschaltung aus Qubits als Zustands-Eingangsgrößen eingerichtet, deren Zustände mögliche Bi-Phasen-Codes repräsentieren. Hierzu ist die gatterbasierte Quantenschaltung zur Ausführung der folgenden Schritte eingerichtet:

- Berechnen der Autokorrelation der die möglichen Kombinationen von Bi-Phasen-Codes beinhaltenden Zustände der Zustands-Eingangsgrößen mit mehreren diskreten Schritten, und
- Identifizieren eines Bi-Phasen-Codes als optimal, wenn der Wert der Autokorrelation in allen aufeinanderfolgenden diskreten Schritten der Berechnung der Autokorrelation kleiner als der vorgegebene Schwellwert ist.

Ein Qubit ist ein Zwei-Zustands-Quantensystem das, vergleichbar mit klassischen Bits, zwei durch passende Messung unterscheidbare Zustände beschreibt.

Wie bei klassischen Bits werden mehrere Qubits kombiniert, um größere Zustands-Quantensysteme darstellen zu können. Qubits können aufgrund des quantenmechanischen Prinzips der Superposition mehrere der so als Bit-Sequenzen encodierten Zustände gleichzeitig beinhalten.

Mathematisch werden die möglichen Zustände durch einen Hilbertraum beschrieben, dessen Basiszustände aus dem Tensorprodukt der Einzel-Qubit-Basis-Zustände hervorgehen.

Darüber hinaus können Zustände durch das quantenmechanische Prinzip der Verschränkung in kausale Abhängigkeiten gebracht werden.

Superposition und Quantenverschränkung erlauben die Implementation von Rechnungen mit Quantenschaltkreisen, die mit klassischen Schaltkreisen unmöglich sind. Die vollständige Suche von Bi-Phasen-Codes mit optimalem Haupt- zu Nebenkeulenverhältnis kann damit z. B. durch den wohlbekannten Grover Such- und Zählalgorithmus realisiert werden, der mit einem reversiblen Autokorrelations-Quantenschaltkreis zur quantenmechanischen Berechnung der Autokorrelationskondition kombiniert wird.

Die vorliegende Erfindung beruht auf einem Verfahren zur Ermittlung optimaler Bi-Phasen-Codes mit Hilfe eines Quantenschaltkreises für gatter-basierte Quantenarchitekturen eines Quantencomputers, mit dem die technischen Beschränkungen herkömmlicher Prozessoren überwunden und deutlich längere Codesequenzen aufgefunden werden können. Diese haben einen Effekt bei ihrem bestimmungsgemäßen Einsatz in der Funktechnik, Nachrichtentechnik und Radartechnik sowie der Synchronisation verteilter technischer Systeme.

Das erfindungsgemäße Berechnungskonzept der vollständigen Suche von Bi-Phasen-Codes mit optimalem Haupt- zu Nebenkeulenverhältnis stützt sich auf Rechenmethoden, die nur auf modernen Quantencomputern möglich sind, in Kombination mit einem spezifischen reversiblen Autokorrelationsschaltkreis. Der Schaltkreis benutzt die Eigenschaften von gatter-basierten Quantenarchitekturen, um den Rechenaufwand zu reduzieren und so das Berechnen von längeren optimalen Bi-Phasen-Codes zu ermöglichen. Das quantenphysikalische Prinzip der Superposition erlaubt dem Schaltkreis den gesamten Suchraum gleichzeitig zu betrachten und durch Quantengatter einen Zustand zu erzeugen, dessen Messung optimale Bi-Phasen-Codes sind. Durch Wiederholen des Prozesses werden so alle optimalen Sequenzen gefunden. Damit lässt sich eine vollständige Suche implementieren. Der rechnerische Aufwand beläuft sich dabei auf $O(2^{N/2})$. Dies ist ein signifikanter Vorteil gegenüber dem Stand der Technik von $O(2^N)$.

Können mit aktuellen Methoden z. B. vollständige Suchen bis $N$= 60 durchgeführt werden, sind durch das erfindungsgemäße Verfahren theoretisch Suchen bis zu $N$= 120 möglich)

Mithilfe der Quantengatters werden eines oder mehrere Qubits physikalisch manipuliert, um auf diese Weise eine unitäre Operation auf den Zustand des Quantenregisters auszuführen. Mehrere Quantengatter, die in fester zeitlicher Abfolge auf das Quantenregister angewendet werden, bilden einen Quantenschaltkreis.

Es kann ein Eingeben von Bi-Phasen-Codes mit einer Anzahl von Bits als Eingangsgrößen und eine diskrete Transformation einer Folge dieser Qubits zu einem Spektrum erfolgen, das mögliche Kombinationen der Bi-Phasen-Codes beinhaltet, wobei die Ermittlung der optimalen Bi-Phasen-Codes aus den transformierten Spektrum erfolgt.

Hierzu kann die gatterbasierte Quantenschaltung einen Eingang für eine Zustandsgruppe ("State(n)") einer Anzahl n von Qubits und Hadamard-Gatter zur gleichwertigen Überlagerung der beiden Basiszustände |0⟩ und |1⟩ der Qubits haben. Der Ausgang der Hadamard-Gatter für die Zustandsgruppe ist zur Bereitstellung der möglichen Kombinationen der Bi-Phasen-Codes durch die mit den Hadamard-Gattern durchgeführte diskrete Transformation einer Folge der Qubits zu einem Spektrum eingerichtet. Die gatterbasierte Quantenschaltung ist dabei weiterhin zur Ermittlung der optimalen Bi-Phasen-Codes aus dem transformierten Spektrum eingerichtet.

Es kann eine Ermittlung der optimalen Bi-Phasen-Codes mit einem Grover-Algorithmus durch Berechnen der Anzahl von geeigneten Bi-Phasen-Codes in diskreten Schritten mit Grover Operatoren erfolgen, die zum Zählen der Anzahl M von optimalen Bi-Phasen-Codes durch Ausgabe von Zähl-Qubits ("Estimate(t)") ausgebildet sind. Sodann kann ein Suchen der optimalen Bi-Phasen-Codes aus der ermittelten Anzahl von geeigneten Bi-Phasen-Codes mit einer Grover-Suche mit Grover Operatoren durchgeführt werden, die zur Identifikation der optimalen Bi-Phasen-Codes mittels Rotation durch den durch die Berechnung der Autokorrelation aufgespannten Subraum eingerichtet sind.

Hierzu kann die gatterbasierte Quantenschaltung zur Berechnung der Anzahl von geeigneten Bi-Phasen-Codes in diskreten Schritten mit Grover Operatoren eingerichtet sein. Diese Grover Operatoren sind als Quantenschaltkreise zum Zählen der Anzahl M von optimalen Bi-Phasen-Codes durch Ausgabe von Zähl-Qubits ausgebildet. Die Quantenschaltkreise sind weiterhin zum Suchen der optimalen Bi-Phasen-Codes aus der ermittelten Anzahl M von geeigneten Bi-Phasen-Codes mit einer Grover-Suche mit Grover Operatoren ausgebildet. Die Grover Operatoren sind dabei zur Identifikation der optimalen Bi-Phasen-Codes mittels Rotation durch den durch die Berechnung der Autokorrelation aufgespannten Subraum eingerichtet.

Es kann eine Bestimmung der Anzahl von akzeptablen diskreten Autokorrelationsschritten mit Hilfe der Grover Operatoren vorgenommen werden, welche aus den die möglichen Kombinationen von Bi-Phasen-Codes beinhaltenden Zuständen der Zustands-Eingangsgrößen und aus Vorhersage-Qubits ("Oracle"), die nach einem Autokorrelationsschritt zur Zwischenspeicherung von Interaktionen einzelner Zustands Bits und der Autokorrelation eines Bi-Phasen-Codes nach einem diskreten Schritt vorhanden sind, die Anzahl akzeptabler diskreter Autokorrelationsschritte berechnen und als Ergebnis der Interaktionen einen optimalen Bi-Phasen-Code ausgeben.

Um die diskreten Quantenschaltkreise jeweils zurückzusetzen, kann ein invertiertes diskretes Ausführen der Verfahrensschritte nach Durchführung der diskreten Schritte zur Ermittlung eines optimalen Bi-Phasen-Codes mit dem jeweiligen Quantenschaltkreis vorgesehen sein. Damit kann während der parallelen Prozessausführung in einem zeitdiskreten Verfahren eine Zurücksetzung des Zustandes des gatterbasierten Quantenschaltkreises erfolgen. Hierzu kann die gatterbasierte Quantenschaltung jeweils invertierte gatterbasierte Quantenschaltkreise haben, die zur invertierten diskreten Ausführung der Verfahrensschritte und zur Zurücksetzung des Zustandes des gatterbasierten Quantenschaltkreises eingerichtet sind

Die Erfindung wird nachfolgend anhand der beigefügten Zeichnungen mit einem Ausführungsbeispiel näher erläutert. Es zeigen:

Fig. 1 - Blockschaltbild eines Quantenschaltkreises zur Bestimmung der Anzahl M an optimalen Bi-Phasen-Codes mit einem Grover-Algorithmus;

Fig. 2 - Blockschaltbild eines Quantenschaltkreises zur Suche nach optimalen Bi-Phasen-Codes mit der vorher bestimmten Anzahl M;

Fig. 3 - Blockschaltbild eines Quantenschaltkreises G zur Implementierung eines Grover-Operators;

Fig. 4 - Blockschaltbild eines Quantenschaltkreises AK zur Bestimmung der Autokorrelation;

Fig. 5 - Blockschaltbild eines Quantenschaltkreises EQ zur Validierung der ermittelten Anzahl von akzeptablen Autokorrelationszeitschritten;

Fig. 6 - Blockschaltbild eines Quantenschaltkreises $D_i$ zur Bestimmung der Autokorrelation und Überprüfung, ob der Autokorrelationswert kleiner als ein vorgegebener akzeptabler Maximalwert ist;

Fig. 7 - Blockschaltbild eines Quantenschaltkreises $B_i$ zur Überprüfung, ob der Autokorrelationswert kleiner ein vorgegebener akzeptabler Maximalwert ist;

Fig. 8 - Blockschaltbild eines Quantengatters FL zur Verarbeitung der Autokorrelation eines jeweiligen Zeitschrittes eines Bi-Phasen-Codes;

Fig. 9 - Blockschaltbild eines Quantenschaltkreises $-T_2$ zur Negierung der jeweils zwischengespeicherten Autokorrelation eines Zeitschrittes eines Bi-Phasen-Codes;

Fig. 10 - Blockschaltbild eines Quantenschaltkreises $A_i$ für einen Zeitschritt einer Autokorrelation;

Fig. 11 - Blockschaltbild eines Quantenschaltkreises $A_{i,j}$ zur Speicherung der Interaktion individueller Zustands-Bits von Zustands-Qubits und negierte Zwischenspeicherung für die Berechnung der Autokorrelation $A_{i,j}$ eines Bi-Phasen-Codes;

Fig. 12 - Blockschaltbild eines Quantengatters zur Negierung von Zuständen $C_{-1}$.

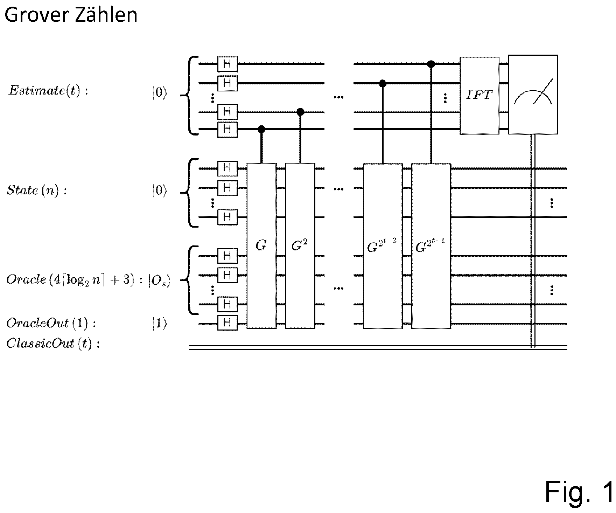

Fig. 1 zeigt ein Blockschaltbild eines Quantenschaltkreises zur Bestimmung der Anzahl $M$ an optimalen Bi-Phasen-Codes mit einem Grover-Algorithmus.

Um eine vollständige Suche von optimalen Bi-Phasen-Codes, die einen unter einem vorgegebenen Schwellwert m liegenden Wert der Autokorrelation haben, mit Quantenschaltkreisen durchzuführen, wird zuerst die Anzahl $M$ an optimalen Sequenzen (d. h. Bi-Phasen-Codes) bestimmt. Hierzu ist der in Figur 1 dargestellte Quantenschaltkreis vorgesehen.

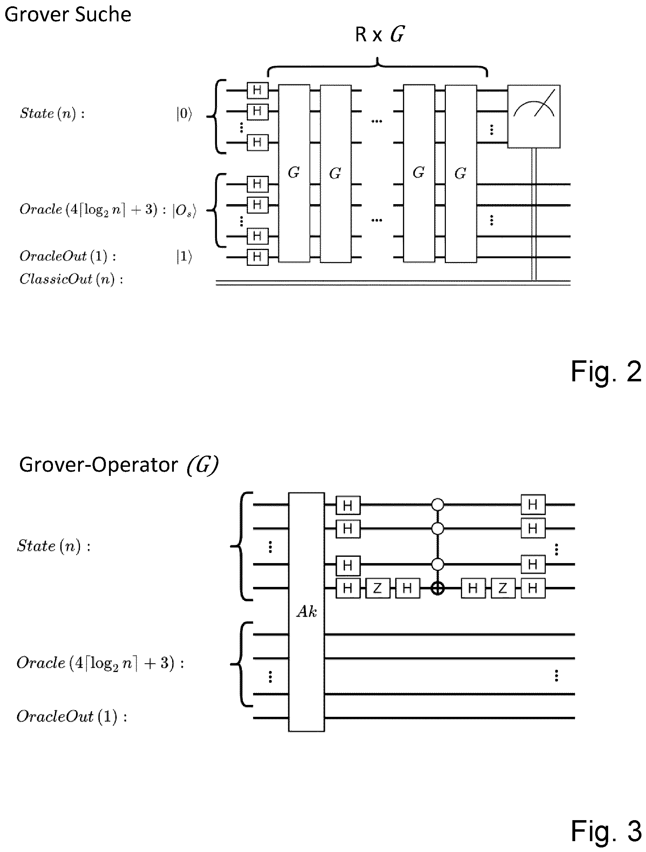

Anschließend werden durch den in Figur 2 gezeigten Quantenschaltkreis, diese optimalen Sequenzen ermittelt.

Im Folgenden stehen untere Gaußklammern für Abrunden und obere Gaußklammern für Aufrunden.

Der Quantenschaltkreis nutzt folgende Register:

Die Anzahl t von Registern "Estimate(t)" dienen zur Zählung der Anzahl Man Bi-Phasen-Codes (Sequenzen). Die Zähl-Qubits, die im Anfangszustand auf den Basiszustand $|0\rangle$ gesetzt werden, enthalten eine binäre Repräsentation der Zahl M.

Die Zustandsregister "State" beinhalten nach Anwenden der Hadamard-Gatter H alle möglichen Kombinationen der Bi-Phasen-Codes. Am Eingang werden die Zustands-Qubits der Zustandsregister im Anfangszustand auf den Basiszustand $|0\rangle$ gesetzt.

Die Vorhersageregister "Oracle" und "OracleOut" sind Verwaltungsregister zur Berechnung der Autokorrelation.

Die "Oracle"-Register sind eine Gruppe von $4\lceil log_2 n \rceil + 3$. Vorhersage-Qubits und das Vorhersage-Ausgaberegister "OracleOut" beinhaltet ein Vorhersageergebnis-Qubit. Der Anfangszustand der Vorhersageregister wird später im Zusammenhang mit dem Subschaltkreis "Autokorrelation" beschrieben.

Im Ergebnisregister "Classic Out" wird das Ergebnis der Messung digital mit einer Anzahl an t Bits mit Hilfe einer klassischen Elektronik gespeichert.

Der Quanten-Zählschaltkreis implementiert das bekannte Grover-Zählprinzip, um damit die Anzahl $M$ der optimalen Bi-Phasen-Sequenzen der Länge $N$ zu bestimmen: Nach Präparieren des Anfangszustandes durch Anwenden des Hadamard-Gatters H auf alle Qubits werden für $y = 1,..,t - 1$; $t = \left\lfloor \frac{N}{2} \right\rfloor + 4$ eine Anzahl von $2^y$ Grover Operatoren (G), kontrolliert durch das y-te Zähl Qubit, auf die Zustands-Qubits "State($n$)" angewandt.

Die Implementierung der Grover-Operatoren G ist in der Figur 3 gezeigt.

Anschließend werden die Zähl-Qubits ("Estimate(t)") invers Fourier transformiert (IFT) und anschließend gemessen. Die Messung ist in Figur 1 durch das Messsymbol angedeutet. Die Technik zur inversen Fouriertransformation mit Quantengattern und Messung ist aus der Technologie der Quantencomputer bekannt.

Aus dem klassischen Rückgebewert s wird durch $\sin(\pi s)^2\, 2^{n+1} = M$ die Anzahl der optimalen Bi-Phasen Sequenzen berechnet. Dieser Schaltkreis wird O(1) mal wiederholt, um das Erhalten der richtigen Rückgabe mit hinreichender Signifikanz zu garantieren.

Hadamard-Gatter H sind bekannt. Der Basiszustand $|0\rangle$ wird auf $\frac{|0\rangle + |1\rangle}{\sqrt{2}}$ und der Basiszustand $|1\rangle$ wird auf $\frac{|0\rangle - |1\rangle}{\sqrt{2}}$ übertragen, um auf diese Weise eine gleichwertige Überlagerung der beiden Basiszustände zu erreichen. Dies stellt eine diskrete Transformation einer Folge von Qubits zu einem Spektrum mit der Transformationsmatrix:

$$H = \frac{1}{\sqrt{2}}\begin{pmatrix} 1 & 1 \\ 1 & -1 \end{pmatrix}$$ dar.

Fig. 2 zeigt ein Blockschaltbild eines Quantenschaltkreises zur Suche nach optimalen Bi-Phasen-Codes mit der vorher bestimmten Anzahl $M$.

Auch dieser Quantenschaltkreis nutzt die Zustandsregister "State", die eine Anzahl n Qubits mit dem Anfangszustand $|0\rangle$ bereitstellen und nach Anwenden der Hadamard-Gatter alle möglichen Kombinationen der Sequenzen beinhalten.

Die Ereignisregister "Oracle" und "OracleOut" stellen $4\lceil log_2 n\rceil + 4$ Qubits in dem Anfangszustand bereit, der für den Subschaltkreis Autokorrelation beschrieben ist. Die Ereignisregister sind Verwaltungsregister zur Berechnung der Autokorrelation.

Das Ausgaberegister "Classic Out" dient zur klassischen elektrischen Speicherung des Ergebnisses der Messung mit $n$ Bits.

Der Quanten-Suchschaltkreis implementiert das bekannte Grover Suchprinzip um mit der bekannten Anzahl $M$ der optimalen Bi-Phasen Sequenzen der Länge $N$, diese zu finden.

Nach Präparieren des Anfangszustandes durch Anwenden des Hadamard-Gatters H auf alle Qubits am Eingang

$$R = \left\lfloor \frac{\pi}{4}\sqrt{\frac{2^N}{M}} + 0{,}5 \right\rfloor$$

des Quanten-Suchschaltkreises wird eine Anzahl von Grover Operatoren G auf die Zustands-Qubits angewandt. Eine anschließende Messung der Zustands-Qubits im Zustandsregister State(n) gibt mit hoher Wahrscheinlichkeit eine optimale Sequenz zurück. Durch $O(M)$ Wiederholungen werden so alle optimalen Lösungen bestimmt.

Fig. 3 zeigt ein Blockschaltbild eines Quantenschaltkreises G zu Implementierung eines Grover-Operators.

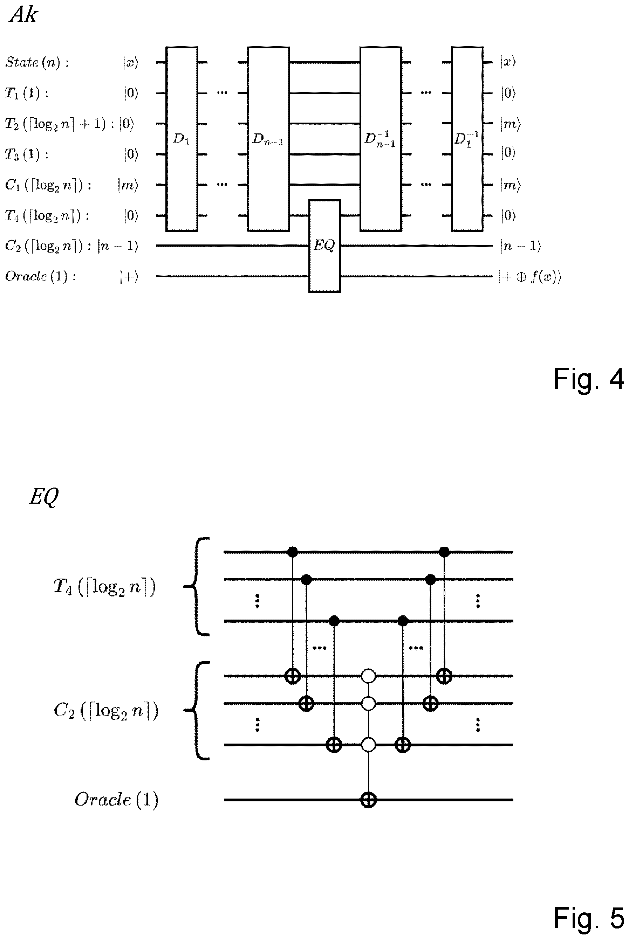

Der bekannte Grover-Operator implementiert die Rotation durch den einem in Figur 4 gezeigten reversiblen Autokorrelationsschaltkreis aufgespannten Subraum. Hierzu werden als Quanten-Gatter die Hadamard-Gatter H, zwei Z-Gatter Z sowie ein Autokorrelationsschaltkreis Ak genutzt. Die am Ausgang des Autokorrelationsschaltkreises anliegenden Zustands-Qubits "State(n)" werden jeweils mit einem Hadamard-Gatter diskret transformiert und überprüft, ob die n-1 Zustands-Qubits gleich Null sind, um in diesem Fall das Ergebnis im letzten Zustandsregister State(n) abzuspeichern. Der nach der Hadamard-Transformation im letzten Zustandsregister vorliegende Zustand wird vorher mit dem

$$Z = \begin{pmatrix} 1 & 0 \\ 0 & -1 \end{pmatrix}$$

Z-Gatter durch die Transformationsmatrix gespiegelt, um eine Vorzeichenumkehr des Zustands $|11\rangle$ in $-|11\rangle$ zu erreichen. Anschließend folgt eine weitere Hadamard-Transformation. Auf diesen Zustand wird dann das Ergebnis der Überprüfung angewendet, ob die Zustände der Zustandsregister gleich $|0\rangle$ sind.

Die in Figur 3 gezeigten folgenden H- und Z-Gatter dienen zur Invertierung der Zustände auf den Zustandsregistern, um diese nach Abschluss der Überprüfung wieder in ihren Ausgangszustand zurückzusetzen.

Fig. 4 zeigt ein Blockschaltbild eines Quantenschaltkreises AK zur Bestimmung der Autokorrelation.

Dieser Quantenschaltkreis AK nutzt wiederum die Zustandsregister "State" mit einer Anzahl von n Qubits, die im Anfangszustand einen positiven Eigenzustand $I + \rangle^{\oplus n}$ aufweisen und durch die vorherige Hadamard-Transformation alle möglichen Kombinationen der Bi-Phasen-Sequenzen beinhalten.

Weiterhin sind Zwischenspeicherregister $T_i$ und Konstantenregister $C_i$ vorgesehen.

Das Zwischenspeicherregister $T_1(1)$ umfasst ein Qubit im Anfangszustand $|0\rangle$, auf dem die Interaktion individueller Zustandsbits abgespeichert wird.

Das Zwischenspeicherregister $T_2(\lceil log_2 n\rceil + 1)$ umfasst eine Anzahl von $\lceil log_2 n\rceil + 1$ Qubits im Anfangszustand $|0\rangle$ und dient als Zwischenspeicher für die Autokorrelation eines Zeitschrittes i einer Sequenz.

Das Zwischenspeicherregister $T_3(1)$ umfasst ein Qubit im Anfangszustand $|0\rangle$ zum Zwischenspeichern von Vorzeichen.

Das Zwischenspeicherregister $T_4(\lceil log_2 n\rceil)$ umfasst eine Anzahl von $\lceil log_2 n\rceil$ Qubits im Anfangszustand $|0\rangle$, die als Zwischenspeicher für die Anzahl der akzeptablen Autokorrelationszeitschritte dienen.

Das Konstantenregister $C_1(\lceil log_2 n\rceil)$ umfasst eine Anzahl von $\lceil log_2 n\rceil$ Qubits im Anfangszustand $|m\rangle$, um damit den vorgegebenen akzeptablen Maximalwert m zu speichern und für die Überprüfung des ermittelten Wertes der Autokorrelation eines Bi-Phasen-Codes bereitzustellen.

Das Konstantenregister $C_2(\lceil log_2 n\rceil)$ umfasst eine Anzahl von $\lceil log_2 n\rceil$ Qubits im Anfangszustand $|n-1\rangle$, mit denen die Sequenzlänge n-1 gespeichert wird.

Das Vorhersageregister "Oracle" umfasst ein Qubit, auf dem das Ergebnis gespeichert wird.

Der Eingang des in Figur 4 dargestellten Autokorrelationsschaltkreises beschreibt den Anfangszustand der notwendigen Verwaltungsregister. Diese Zustände werden im Laufe des Verfahrens diskret verändert.

Mit den hintereinander geschalteten D-Gattern $D_i$ wird die Autokorrelation mit jedem diskreten Schritt i bestimmt und es wird überprüft, ob der Wert der Autokorrelation (auch Autokorrelationswert genannt) kleiner als der vorgegebenen akzeptable Maximalwert $m$ ist, der im Konstantenregister $C_1$ abgespeichert ist. Wenn die Überprüfung ergibt, dass der Autokorrelationswert kleiner als m ist, erfolgt eine aufgrund der Überprüfung konditionale Addierung +1 auf das Zwischenspeicherregister $T_4$. Dieses wird sozusagen inkrementiert.

Das Zustandsvalidierungs-Gatter EQ ist zur Überprüfung eingerichtet, ob das Zwischenspeicherregister $T_4$ gleich n-1 ist und übergibt dieses Ergebnis an das Qubit im Vorhersageregister "Orakel", welches mit den Grover Operatoren interferiert.

Der Autokorrelationsschaltkreis besteht aus dem Anwenden der Gatter $D_i$, für i = 1, ..., n-1 und dem Validieren des Zustandes durch das Gatter EQ.

Anschließend werden alle temporären Register durch inverses Anwenden der Gatter $D_i$, geleert. Dieses anschließende Zurücksetzen des Zustandes ist allen Sub-Schaltkreisen gemein und wird daher für die anderen Schaltkreise nicht nochmals beschrieben.

Fig. 5 zeigt ein Blockschaltbild eines Zustandsvalidierungs-Quantengatters EQ, das zur Validierung der ermittelten Anzahl von akzeptablen Autokorrelationszeitschritten eingerichtet ist.

Das Zustandsvalidierungs-Gatter EQ überprüft, ob das Zwischenregister $T_4$ gleich n-1 ist und übergibt dieses Ergebnis an das Vorhersageregister "Oracle(1)".

Das Gatter EQ besteht dabei aus $C_{not}$-Operationen zwischen dem Zwischenspeicherregister $T_4$ und dem Konstantenregister $C_2$. Sind die Bits im selben Zustand, so befindet sich das respektive Qubit im Konstantenregister $C_2$ im Zustand 0, sonst im Zustand 1. Anschließend wird überprüft, ob das Konstantenregister C2 gleich 0 ist und das Überprüfungsergebnis wird im Vorhersageregister "Orakel(1)" abgespeichert.

Die Überprüfungslogik kann mit der nachfolgenden Formel beschrieben werden:

$$T_4 C_2 O = |x\rangle|m\rangle| + \rangle \xrightarrow{C_{not}} |x\rangle|m - x\rangle \xrightarrow{E} |x\rangle|m - x\rangle| + \rangle \oplus (m - x = 0)\rangle \rightarrow |x\rangle|m\rangle| + \rangle \oplus (m - x = 0)\rangle$$

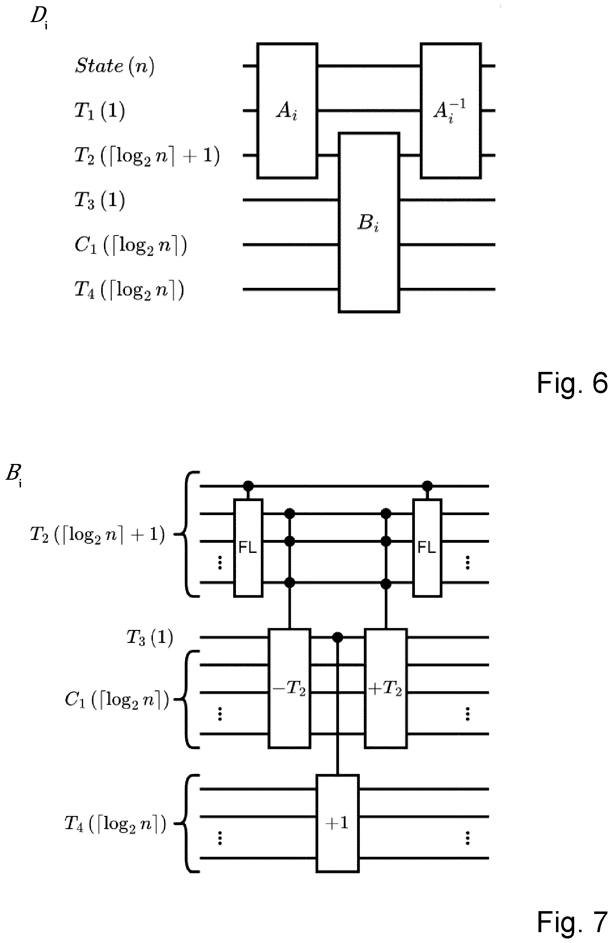

Fig. 6 zeigt ein Blockschaltbild eines Quantenschaltkreises $D_i$ zur Bestimmung der Autokorrelation und Überprüfung, ob der Autokorrelationswert kleiner als ein vorgegebener akzeptabler Maximalwert ist.

Der Quantenschaltkreis Di wird aus einem Sub-Schaltkreis $A_i$ für die diskrete Berechnung der Autokorrelation im Schritt i der in den Zustandsregistern State(n) vorgegebenen Bi-Phasen-Codes und den in den Zwischenregistern $T_1(1)$ und $T_2(\lceil log_2 n \rceil + 1)$ vorhandenen Zustände der dortigen Qubits und einem folgenden Sub-Schaltkreis $B_i$ für die Überprüfung der im Zwischenregister $T_2(\lceil log_2 n \rceil + 1)$ zwischengespeicherten Autokorrelation des Zeitschrittes i einer Sequenz gebildet.

Der Sub-Schaltkreis $D_1$ führt die folgende Operation aus:

$$|x\rangle|0\rangle|0\rangle|0\rangle|m\rangle|0\rangle \xrightarrow{A_i} |x\rangle|0\rangle|Ak_i(x)\rangle|0\rangle|m\rangle|0\rangle \xrightarrow{B_i} |x\rangle|0\rangle|Ak_i(x)\rangle|0\rangle|m\rangle||Ak_i(x)| \leq m\rangle$$

$$\xrightarrow{A_i^{-1}} |x\rangle|0\rangle|0\rangle|0\rangle|m|Ak_i(x)\rangle|0\rangle|m\rangle||Ak_i(x)| \leq m\rangle$$

Fig. 7 zeigt ein Blockschaltbild des Quantenschaltkreises $B_i$ zur Überprüfung, ob der Autokorrelationswert kleiner ein vorgegebener akzeptabler Maximalwert ist.

Hierzu werden mit Sub-Schaltkreisen FL und $-T_2$ die Zwischenspeicherregister $T_2$ bearbeitet und das Ergebnis wird konditional auf das Zwischenspeicherregister $T_4$ inkrementiert (+1-Gatter).

Der Sub-Schaltkreis $B_1$ führt die folgende Operation aus:

$$|Ak_i(x)\rangle|0\rangle|m\rangle|t_4\rangle \xrightarrow{F_i} |x\rangle||Ak_i(x)|\rangle|0\rangle|m\rangle|t_4\rangle$$

$$\xrightarrow{-T_2} ||Ak_i(x)|\rangle|m\rangle||Ak_i(x)| \leq m\rangle||m - Ak_i(x)|\rangle|t_4\rangle$$

$$\xrightarrow{+1} ||Ak_i(x)|\rangle||Ak_i(x)| \leq m\rangle||m - Ak_i(x)|\rangle|t_4 + (|Ak_i(x)| \leq m)\rangle$$

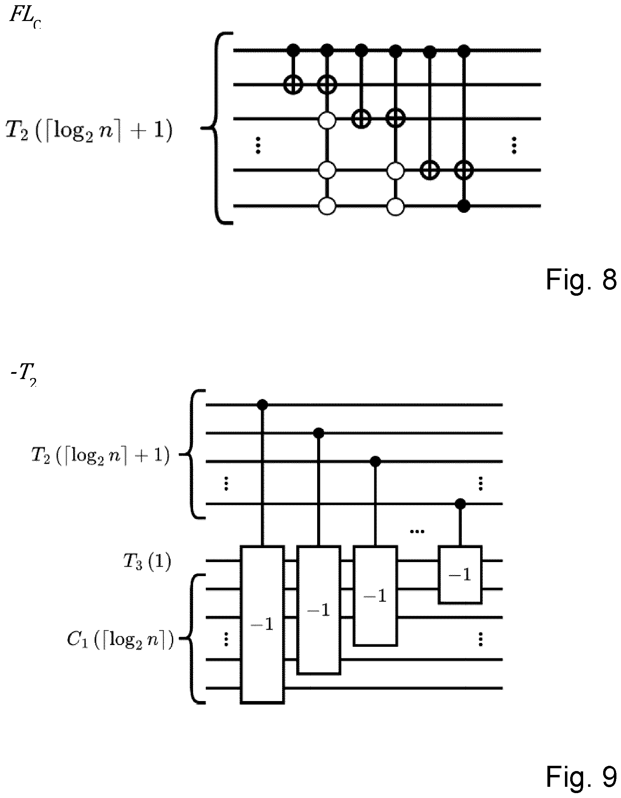

Fig. 8 zeigt ein Blockschaltbild eines Quantengatters FL zur Verarbeitung der Autokorrelation eines jeweiligen Zeitschrittes eines Bi-Phasen-Codes.

Die in dem Zwischenspeicherregister $T_2$ vorhandenen Qubits werden mit kontrollierten Nicht-Gattern (CNOT-Verknüpfungen) bearbeitet, um den reellen Wert des zweiten Qubits in Abhängigkeit vom reellen Wert des ersten Qubits entweder beizubehalten oder zu negieren. Die auf die obersten Qubits des Zwischenregisters bezogenen Operationen führen damit die Funktion aus:

$$|00\rangle \rightarrow |00\rangle; |01\rangle \rightarrow |01\rangle; |10\rangle \rightarrow |11\rangle; |11\rangle \rightarrow |10\rangle$$

Dem folgt eine Überprüfung, ob die anderen Zustände der Qubits im Zwischenspeicherregister T2 gleich $|0\rangle$ sind, um das Ergebnis auf die vorher mit der CNOT-Operation bearbeiteten Qubits zu übertragen.

Fig. 9 zeigt ein Blockschaltbild des Quantengatters $-T_2$ zur Negierung der jeweils zwischengespeicherten Autokorrelation eines Zeitschrittes eines Bi-Phasen-Codes.

Die im Zwischenspeicherregister T2 vorhandenen Zustände der Anzahl von $\lceil log_2 n \rceil + 1$ Qubits werden diskret durch hintereinandergeschaltete Negierer (-1) verarbeitet, um so in dem Zwischenregister $T_3$ das Vorzeichen und in dem Konstantenregister $C_1$ die um 1 verminderte Sequenzlänge zu speichern.

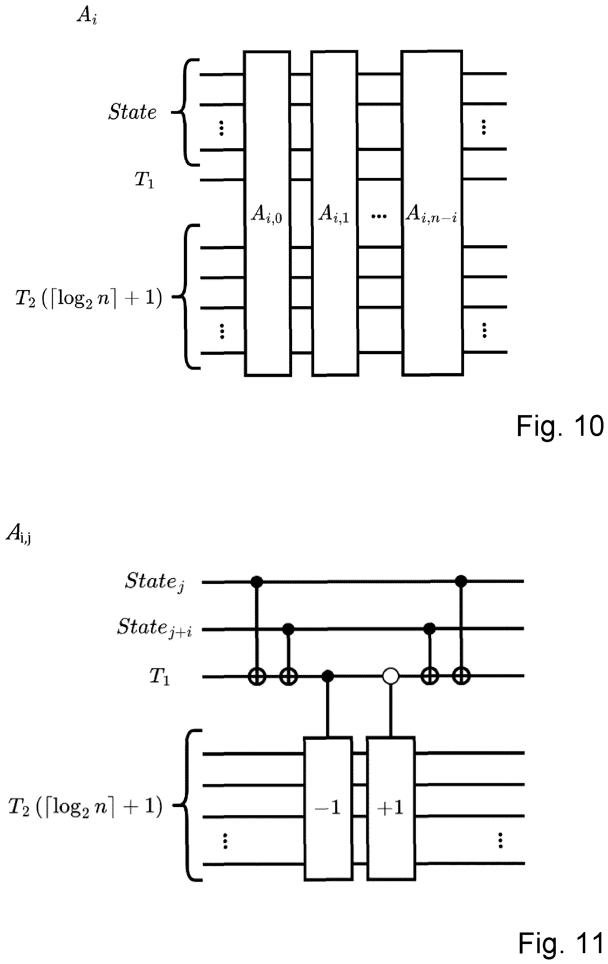

Fig. 10 zeigt ein Blockschaltbild des Quantenschaltkreises $A_i$ für den Zeitschritt i einer Autokorrelation.

Dieser Sub-Schaltkreis $A_i$ ist zur Ausführung der Funktion ausgebildet:

$$|x\rangle|0\rangle|0\rangle \xrightarrow{A_{i,0}} |x\rangle|0\rangle| -1^{x_0 x_i}\rangle \xrightarrow{A_{i,0}} |x\rangle|0\rangle| -1^{x_0 x_i} + -1^{x_1 x_i}\rangle ... \xrightarrow{A_{i,n-i}} |x\rangle|0\rangle|Ak_i(x)\rangle$$

Fig. 11 zeigt ein Blockschaltbild des zur Ausführung dieser Funktion erforderlichen Sub-Quantenschaltkreises $A_{i,j}$ zur Speicherung der Interaktion individueller Zustands-Bits von Zustands-Qubits und negierte Zwischenspeicherung für die Berechnung der Autokorrelation $A_{i,j}$ eines Bi-Phasen-Codes.

Die Qubits der Zustandsregister $State_j$ und $State_{j+1}$ werden jeweils mit einer CNOT-Verknüpfung des auf dem Zwischenregister $T_1$ vorliegenden Qubits bearbeitet und das in dem Zwischenregister $T_1$ vorliegende Ergebnis mit Hilfe eines Quantengatters $C_{-1}$ negiert auf dem Zwischenregister $T_2$ abgespeichert.

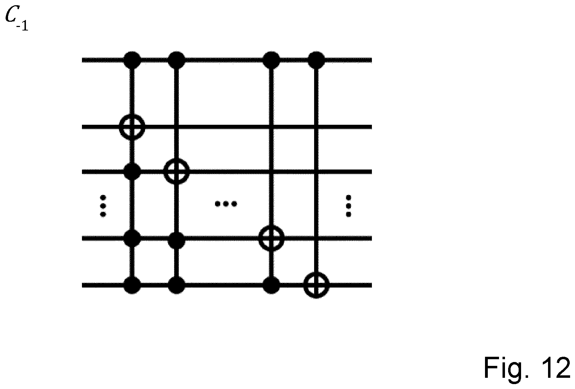

Fig. 12 zeigt ein Blockschaltbild des Quantengatters $C_{-1}$ zur Negierung der Zustände am Eingang des Sub-Quantenschaltkreises.

Die Zustände von Gruppen von Qubits auf dem Zwischenregister T2 werden mit dem Quantengatter $C_{-1}$ negiert. Hierzu werden Gruppen von Qubits nacheinander mit unterschiedlichen Gattern, wie TOFFOLI-Gatter, CNOT-Gatter, verarbeitet. Hierzu können die hintereinandergeschalteten Gatter in der Folge eine jeweils um einen Eingang reduzierte Anzahl an Eingängen haben.

Der oben beispielhaft beschriebene Quantenschaltkreis benutzt für die Zählung der Anzahl M optimaler Bi-Phasen-Codes der Länge N eine Anzahl von $N + \lfloor \frac{N}{2} \rfloor + 4 \lceil log_2 n \rceil + 8$ Qubits bei einer Komplexitätsklasse von $O\left(2^{\lfloor \frac{N}{2} \rfloor}\right)$. Weiter benutzt der Suchschaltkreis eine Anzahl von $N + 4 \lceil log_2 n \rceil + 4$ Qubit, bei einer Komplexitätsklasse von $O\left(M \lfloor \frac{\pi}{4} \sqrt{\frac{2^N}{M} + 0,5} \rfloor\right)$.

Der beschriebene Quantenschaltkreis zur Bestimmung von Bi-Phasen-Codes mit minimaler Autokorrelation kann mit einer Simulation validiert werden. Das Ergebnis wird nachfolgend beschrieben und zusammengefasst.

Der Quantenschaltkreis wurde für Codelängen N = 3, ..., 11 in Python mithilfe des Open-Source Quantum Development Paket "Qiskit" implementiert. Anschließend wurden mit Hilfe des "aer simulator"-Backends des "qiskit.Aer"-Moduls pro Codelänge jeweils 1000 Durchläufe des Quantenschaltkreises mit anschließender Messung simuliert. Die optimale Autokorrelation M, Anzahl benötigter Qubits, statistische Repräsentation der Ergebnisse, Anzahl optimaler Bi-Phasen Codes B, und Beispielcodes sind in der nachfolgenden Tabelle zusammengefasst:

Tabelle: Statistische Ergebnisse der Simulation des Quantenschaltkreises zur Bestimmung von optimalen Bi-Phasen-Codes.

| N | M | Qubits | Treffer | Misserfolge | B | Beispielcode |
|---|---|--------|---------|-------------|---|--------------|
| 3 | 1 | 15 | 509 | 491 | 4 | 001 |
| 4 | 1 | 20 | 490 | 510 | 8 | 0001 |
| 5 | 1 | 21 | 945 | 55 | 4 | 00010 |

(fortgesetzt)

| N | M | Qubits | Treffer | Misserfolge | B | Beispielcode |
|---|---|--------|---------|-------------|---|--------------|
| 6 | 2 | 22 | 682 | 318 | 28 | 000010 |
| 7 | 1 | 23 | 1000 | 0 | 4 | 0001101 |
| 8 | 2 | 28 | 373 | 627 | 64 | 00001011 |
| 9 | 2 | 29 | 821 | 179 | 80 | 000001101 |
| 10 | 2 | 30 | 953 | 47 | 40 | 0000011010 |
| 11 | 1 | 31 | 999 | 1 | 4 | 00011101101 |

M ist hier die optimale Autokorrelation für Codes der Länge N, von denen B verschiedene existieren.

Treffer bedeutet hier, dass der als Ergebnis eines Durchlaufes simulierte Bi-Phasen Code tatsächlich die korrekte Autokorrelation aufweist. Simuliert wurde ein idealer Quantencomputer, ohne Einfluss von Fehlerquellen wie Dekorrelation und Quanten-Rauschen. In den Simulationen wurden alle optimalen Bi-Phasen Codes gefunden und hatten, bei zu erwartender Varianz, ähnliche relative Häufigkeit.

Da alle optimalen Bi-Phasen Codes gefunden wurden und weiter die hier erhaltenen Treffer pro Simulation die zuvor errechneten Erfolgswahrscheinlichkeiten reflektieren, wird somit die Anwendung des Quantenschaltkreises zur Bestimmung von Bi-Phasen-Codes mit minimaler Autokorrelation bestätigt.

Die niedrigeren Erfolgswahrscheinlichkeiten treten bei manchen kurzen Codesequenzlängen auf, da hier die Anzahl optimaler Codesequenzen 25% - 50% aller Codesequenzen ausmacht. Da dies für längere Codesequenzen nicht mehr auftritt, sind die resultierenden Erfolgswahrscheinlichkeiten groß.

Die so erhaltenen optimalen Bi-Phasen-Codes sind insbesondere zur Verwendung in folgenden Anwendungen geeignet und vorgesehen:

| | |
|---|---|
| Funktechnik: | Für Frequenzspreizverfahren (Direct Sequence Spread Spectrum (DSSS)) um die Störsicherheit bei Funkübertragungen zu verbessern. |
| Nachrichtentechnik: | Für Spreizcodes, um mittels Codemultiplexverfahren mehrere Nutzersignale am Ort des Empfängers voneinander trennen zu können. |
| Radartechnik: | Für Pulskompressionsverfahren, um die Entfernungsauflösung zu verbessern, bzw. den Signal-zu-Rausch-Abstand zu erhöhen. |
| Synchronisation: | In technischen Anwendungen müssen oft räumlich verteilte Systeme miteinander synchronisiert werden. Ein Beispiel sind bistatische Radarsysteme, deren Oszillatoren synchron laufen müssen. Andere Beispiele sind die Rahmensynchronisation bei ISDN, Bluetooth oder WLAN, wo typischerweise Barker-Codes eingesetzt werden. Ziel bei der Synchronisation ist immer, dass der Empfänger das gesendete Signal zuverlässig erkennen kann. Das Signal soll also einen großen Störabstand haben. |

**Patentansprüche**

1. Verfahren zur automatischen Ermittlung von optimalen Bi-Phasen-Codes, die einen unter einem vorgegebenen Schwellwert liegenden Wert der Autokorrelation des jeweiligen Bi-Phasen-Codes haben, **gekennzeichnet durch**

   - Ermitteln der optimalen Bi-Phasen-Codes mit einem gatterbasierten Quantenschaltkreis eines Quantencomputers aus Qubits als Zustands-Eingangsgrößen, deren Zustände mögliche Bi-Phasen-Codes repräsentieren, durch
   - Berechnen der Autokorrelation der die möglichen Kombinationen von Bi-Phasen-Codes beinhaltenden Zustände der Zustands-Eingangsgrößen mit mehreren diskreten Schritten, und
   - Identifizieren eines Bi-Phasen-Codes als optimal, wenn der Wert der Autokorrelation in allen aufeinanderfolgenden diskreten Schritten der Berechnung der Autokorrelation kleiner als der vorgegebene Schwellwert ist.

2. Verfahren nach Anspruch 1, **gekennzeichnet durch** Eingeben von Bi-Phasen-Codes mit einer Codesequenzlänge als Anzahl von Bits als Eingangsgrößen und diskrete Transformation einer Folge dieser Qubits zu einem Spektrum, das mögliche Kombinationen der Bi-Phasen-Codes beinhaltet, wobei die Ermittlung der optimalen Bi-Phasen-Codes aus den transformierten Spektrum erfolgt.

3. Verfahren nach Anspruch 1 oder 2, **gekennzeichnet durch** Ermittlung der optimalen Bi-Phasen-Codes mit einem Grover-Algorithmus durch Berechnen der Anzahl von geeigneten Bi-Phasen-Codes in diskreten Schritten mit Grover Operatoren, die zum Zählen der Anzahl M von optimalen Bi-Phasen-Codes durch Ausgabe von Zähl-Qubits ausgebildet sind, und durch Suchen der optimalen Bi-Phasen-Codes aus der ermittelten Anzahl von geeigneten Bi-Phasen-Codes mit einer Grover-Suche mit Grover Operatoren, die zur Identifikation der optimalen Bi-Phasen-Codes mittels Rotation durch den durch die Berechnung der Autokorrelation aufgespannten Subraum eingerichtet sind.

4. Verfahren nach Anspruch 3, **dadurch gekennzeichnet, dass** die Grover Operatoren aus den die möglichen Kombinationen von Bi-Phasen-Codes beinhaltenden Zuständen der Zustands-Eingangsgrößen und Vorhersage-Qubits, die nach einem Autokorrelationsschritt zur Zwischenspeicherung von Interaktionen einzelner Zustands Bits und der Autokorrelation eines Bi-Phasen-Codes nach einem diskreten Schritt vorhanden sind, die Anzahl von akzeptablen diskreten Autokorrelationsschritten bestimmen und als Ergebnis der Interaktionen einen optimalen Bi-Phasen-Code ausgeben.

5. Verfahren nach einem der vorhergehenden Ansprüche, **gekennzeichnet durch** invertierte diskrete Ausführung der Verfahrensschritte nach Ermittlung eines optimalen Bi-Phasen-Codes zur Zurücksetzung des Zustandes des gatterbasierten Quantenschaltkreises.

6. Vorrichtung zur automatischen Ermittlung von optimalen Bi-Phasen-Codes, die einen unter einem vorgegebenen Schwellwert liegenden Wert der Autokorrelation des jeweiligen Bi-Phasen-Codes haben, mit einer gatterbasierten Quantenschaltung eines Quantencomputers zur Verarbeitung von Qubits, **dadurch gekennzeichnet, dass** die gatterbasierte Quantenschaltung zum Ermitteln der optimalen Bi-Phasen-Codes mit der gatterbasierten Quantenschaltung aus Qubits als Zustands-Eingangsgrößen, deren Zustände mögliche Bi-Phasen-Codes repräsentieren, eingerichtet ist durch

   - Berechnen der Autokorrelation der die möglichen Kombinationen von Bi-Phasen-Codes beinhaltenden Zustände der Zustands-Eingangsgrößen mit mehreren diskreten Schritten, und
   - Identifizieren eines Bi-Phasen-Codes als optimal, wenn der Wert der Autokorrelation in allen aufeinanderfolgenden diskreten Schritten der Berechnung der Autokorrelation kleiner als der vorgegebene Schwellwert ist.

7. Vorrichtung nach Anspruch 6, **dadurch gekennzeichnet, dass** die gatterbasierte Quantenschaltung einen Eingang für eine Zustandsgruppe einer Anzahl n von Qubits und Hadamard Gatter zur gleichwertigen Überlagerung der beiden Basiszustände |0⟩ und 11) der Qubits hat und der Ausgang der Hadamard Gatter für die Zustandsgruppe zur Bereitstellung der möglichen Kombinationen der Bi-Phasen-Codes durch die mit den Hadamard Gattern durchgeführte diskrete Transformation einer Folge der Qubits zu einem Spektrum eingerichtet ist, wobei die gatterbasierte Quantenschaltung weiterhin zur Ermittlung der optimalen Bi-Phasen-Codes aus den transformierten Spektrum eingerichtet ist.

8. Vorrichtung nach Anspruch 6 oder 7, **dadurch gekennzeichnet, dass** die gatterbasierte Quantenschaltung Berechnung der Anzahl von geeigneten Bi-Phasen-Codes in diskreten Schritten mit Grover Operatoren eingerichtet ist, die zum Zählen der Anzahl M von optimalen Bi-Phasen-Codes durch Ausgabe von Zähl-Qubits ausgebildet sind, und zum Suchen der optimalen Bi-Phasen-Codes aus der ermittelten Anzahl M von geeigneten Bi-Phasen-Codes mit einer Grover-Suche mit Grover Operatoren, die zur Identifikation der optimalen Bi-Phasen-Codes mittels Rotation durch den durch die Berechnung der Autokorrelation aufgespannten Subraum eingerichtet sind.

9. Vorrichtung nach Anspruch 8, **dadurch gekennzeichnet, dass** die Grover Operatoren zur Bestimmung der Anzahl von akzeptablen diskreten Autokorrelationsschritten aus den die möglichen Kombinationen von Bi-Phasen-Codes beinhaltenden Zuständen der Zustands-Eingangsgrößen und Vorhersage-Qubits, die nach einem Autokorrelationsschritt zur Zwischenspeicherung von Interaktionen einzelner Zustands Bits und der Autokorrelation eines Bi-Phasen-Codes nach einem diskreten Schritt vorhanden sind, und zur Ausgabe eines optimalen Bi-Phasen-Codes als Ergebnis der Interaktionen eingerichtet ist.

10. Vorrichtung nach einem der Ansprüche 6 bis 9, **dadurch gekennzeichnet, dass** die gatterbasierte Quantenschaltung jeweils invertierte gatterbasierte Quantenschaltkreise hat, die zur invertierten diskreten Ausführung der Verfahrensschritte und zur Zurücksetzung des Zustandes des gatterbasierten Quantenschaltkreises mit Ausnahme des Ergebnisses eingerichtet sind.

Grover Zählen

$Estimate(t):$ $\quad|0\rangle$

$State\,(n):$ $\quad|0\rangle$

$Oracle\,(4\lceil\log_2 n\rceil + 3):|O_s\rangle$

$OracleOut\,(1):$ $\quad|1\rangle$

$ClassicOut\,(t):$

Fig. 1

## Grover Suche

Fig. 2

## Grover-Operator *(G)*

Fig. 3

*Ak*

Fig. 4

*EQ*

Fig. 5

Fig. 6

Fig. 7

$FL_C$

$T_2 \left( \lceil \log_2 n \rceil + 1 \right)$

Fig. 8

$-T_2$

$T_2 \left( \lceil \log_2 n \rceil + 1 \right)$

$T_3 (1)$

$C_1 \left( \lceil \log_2 n \rceil \right)$

Fig. 9

$A_i$

Fig. 10

$A_{\mathrm{i,j}}$

Fig. 11

$C_{-1}$

Fig. 12

Europäisches
Patentamt

European
Patent Office

Office européen
des brevets

# EUROPÄISCHER RECHERCHENBERICHT

**Nummer der Anmeldung**

EP 24 17 9057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | COXSON GREGORY E ET AL: "Adiabatic quantum computing for finding low-peak-sidelobe codes", 2014 IEEE HIGH PERFORMANCE EXTREME COMPUTING CONFERENCE (HPEC), IEEE, 9. September 2014 (2014-09-09), Seiten 1-6, XP032733500, DOI: 10.1109/HPEC.2014.7040953 [gefunden am 2015-02-11] | 1,6 | INV. G06N10/60 |
| A | * Seite 1 - Seite 6, linke Spalte, Absatz 1 * ----- | 2-5,7-10 | |
| A,D | US 8 493 245 B2 (DU KE LIN [CA]; WU WEI HSIANG [CN] ET AL.) 23. Juli 2013 (2013-07-23) * Zusammenfassung; Ansprüche 1-42; Abbildungen 1,2,6-10 * * Spalte 1, Zeile 20 - Spalte 29, Zeile 60 * ----- | 1-10 | |
| X,P | Shaydulin Ruslan ET AL: "Evidence of Scaling Advantage for the Quantum Approximate Optimization Algorithm on a Classically Intractable Problem", arXiv (Cornell University), 4. August 2023 (2023-08-04), XP093215456, Gefunden im Internet: URL:https://arxiv.org/abs/2308.02342v1 [gefunden am 2024-10-16] | 1,2,6 | **RECHERCHIERTE SACHGEBIETE (IPC)** G06N |
| A,P | * das ganze Dokument * ----- | 3-5,7-10 | |

Der vorliegende Recherchenbericht wurde für alle Patentansprüche erstellt

| Recherchenort | Abschlußdatum der Recherche | Prüfer |
|---|---|---|
| Den Haag | 17. Oktober 2024 | Volkmer, Markus |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 9057

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-10-2024

| Im Recherchenbericht angeführtes Patentdokument | Datum der Veröffentlichung | Mitglied(er) der Patentfamilie | Datum der Veröffentlichung |
|---|---|---|---|
| US 8493245 B2 | 23-07-2013 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8493245 B2
- US 8831066 B2
- US 7028275 B1
- EP 3908988 B1

**In der Beschreibung aufgeführte Nicht-Patentliteratur**

- **M. DIMITROV ; T. BAITCHEVA ; N. NIKOLOV.** Efficient Generation of Low Autocorrelation Binary Sequences. *IEEE Signal Processing Letters,* 2020, vol. 27, 341-345